# EUROPEAN PATENT SPECIFICATION

(11) **EP 3 346 666 B1**
(45) Date of publication and mention of the grant of the patent: **26.08.2020**
(21) Application number: 18150029.9
(22) Date of filing: 02.01.2018
(51) Int. Cl.: H04L 29/06

(54) **A PREDICTION SYSTEM CONFIGURED FOR MODELING THE EXPECTED NUMBER OF ATTACKS ON A COMPUTER OR COMMUNICATION NETWORK**
ZUR MODELLIERUNG DER ERWARTETEN ANZAHL VON ANGRIFFEN AUF EINEN COMPUTER ODER EIN KOMMUNIKATIONSNETZWERK KONFIGURIERTES PRÄDIKTIONSSYSTEM
SYSTÈME PRÉDICTIF CONFIGURÉ POUR MODÉLISER LE NOMBRE ATTENDU D'ATTAQUES SUR UN ORDINATEUR OU UN RÉSEAU DE COMMUNICATION

(30) Priority: 05.01.2017 IL 24995017
(43) Date of publication of application: 11.07.2018
(73) Proprietor: Deutsche Telekom AG, 53113 Bonn (DE)
(72) Inventor: SHAPIRA, Bracha, 8472811 Beer Sheva (IL); BAR, Ariel, 7740914 Ashdod (IL); MIMRAN, Dudu, 6215505 Tel Aviv (IL); UNGER, Moshe, 5228559 Ramat Gan (IL); ROKACH, Lior, 8496500 Omer (IL); BRODT, Oleg, 8471621 Beer Sheva (IL)
(74) Representative: Savi, Massimiliano

(56) References cited:
- ERIC ALATA ET AL: "Collection and analysis of attack data based on honeypots deployed on the Internet", PROC. FIRST WORKSHOP ON QUALITY OF PROTECTION (QOP 2005), SECURITY MEASUREMENTS AND METRICS, MILAN (ITALIE), 15 SEPTEMBER 2005, PUBLISHED IN ADVANCES IN INFORMATION SECURITY, ISBN-0-387-29016-8, 15 September 2005 (2005-09-15), pages 79-92, XP055455916, France
- ABDALLAH GHOURABI ET AL: "Characterization of attacks collected from the deployment of Web service honeypot : Characterization of attacks from the deployment of honeypot", SECURITY AND COMMUNICATION NETWORKS, vol. 7, no. 2, 1 February 2014 (2014-02-01), pages 338-351, XP055455899, ISSN: 1939-0114, DOI: 10.1002/sec.737
- BAR ARIEL ET AL: "Scalable attack propagation model and algorithms for honeypot systems", 2016 IEEE INTERNATIONAL CONFERENCE ON BIG DATA (BIG DATA), IEEE, 5 December 2016 (2016-12-05), pages 1130-1135, XP033056494, DOI: 10.1109/BIGDATA.2016.7840716 [retrieved on 2017-02-02]

## Description

### Field of the Invention

The present invention relates to the field of computer and communication networks. More particularly, the present invention relates to malicious attacks on computer and communication networks and on methods for predicting the attack rate using an attack monitoring system.

### Background of the Invention

Publications and other reference materials referred to herein are numerically referenced in the following text and respectively grouped in the appended Bibliography which immediately precedes the claims.

The increasing use in modern society of communication and computer networks has led to the ongoing problem of network-attacks. Therefore, there is a growing need to protect and monitor network systems which presents a great security problem that administrators have to face.

Characterizing statistical properties and prediction network-attacks on a target system with good accuracy can provide sufficient early-warning time that will enable defenders to adjust their defense configuration and to better react to the attacks targeting their systems.

Honeypots are a type of sensor for network-attacks. There are used in communication computer networks as security mechanisms for detecting, deflecting and counteracting network-attacks. Generally, a honeypot consist of data that appears to be a legitimate part of the network and contain information or a resource of value to attackers, but is actually isolated, blocked and monitored. In addition, honeypots are able to record metadata regarding the attacks so later on it can be classified and analyzed.

Network telescopes are another type of sensor for network-attack. These sensors allow the administrators to observe large scale network events by capturing traffic from dark (unutilized) Internet address spaces. Network telescopes consist of many devices (sensors) that reside on remote networks capturing traffic from dark address spaces and relaying it back to a central server so that it can also be classified and analyzed.

Honeypots and network telescopes are useful and important tools to collect data on malicious activities and to better understand the strategies and techniques used by attackers to compromise the target system. Those network-attack sensors, as part of an attack monitoring system, can provide information crucial for security administrators to conclude representative and realistic assumptions regarding the kind of threats and vulnerabilities their system will have to cope with.

Despite the popularity of honeypots and network telescopes, there is still a lack of methodologies and systematic frameworks for rigorously analyzing the statistical properties of the captured network-attack data. This may be attributed to the fact that a systematic framework would require both an accurate abstraction of network-attacks and fairly advanced statistical techniques.

Eric Alta et al., "Collection and analysis of attack data based on honeypots deployed on the internet", Advances in Information /security, 15 September 2005, pages 79-92 describes a research project aiming to understand threats on the internet and to provide models to understand the observed phenomena.

Abdallah Ghourabi et al., "Characterization of attacks collected from the deployment of Web service honeypot: Characterization of attacks from the deployment of honeypot", Security and Communication Networks, vol. 7, no.2, February 1, 2014, pages 338-351 describes an automatic technique for analyzing data collected by Web service honeypots to characterize captured attacks and to detect denial-of-service and novel attacks.

Bar Ariel et al., "Scalable attack propagation model and algorithms for honeypot systems", 2016 IEEE International Conference on Big Data (Big Data), IEEE December 5, 2016, pages 1130-1135 describes scalable propagation models that provide insights about attack strategies that target multiple honeypots, rather than analyzing the attacks on each honeypot separately.

It is therefore a purpose of the present invention to provide a prediction system for abstracting network-attack data and modeling the expected number of attacks on an attack monitoring system.

It is another purpose of the present invention to provide a prediction system which is capable of modeling the attack rates and predicting the expected number of attacks at different resolutions, granularity levels and horizons.

It is yet another purpose of the present invention to provide a prediction system comprising a modeling phase that combines aspects from both regression learning and time series analysis tasks in order to improve prediction accuracy.

Further purposes and advantages of this invention will appear as the description proceeds.

### Summary of the Invention

A prediction system that is configured for modeling the expected number of attacks on a computer or communication network using data obtained from sensors of an attack monitoring system is described. The prediction system comprises:
a) a Sensor Attack Data Database configured to contain metadata about attacks observed by the sensors of the attack monitoring system;
b) a Context Filter Module which contains a variety of filters that are configured to define desired contextual features of the attacks data received from the Sensor Attack Data Database;
c) a Configuration Manager Module which is configured to enable a user to define a configuration of models used to predict the expected number of attacks on the computer or communication network;
d) a Data Aggregator and Feature Extractor Module which is configured to aggregate the number of observed attacks contained in the Sensor Attack Data Database which meet the conditions that were defined in the Context Filter Module and to create the required features and target variables for the modeling task;
e) an Attack Rate Modeler Module which is configured to use the features and target variables from the Data Aggregator and Feature Extractor Module and to generate the required sets of models according to the configurations specified in the Configuration Manager Module; and
f) an Attack Rate Prediction Models Database which is configured to store all the models generated in the Attack Rate Modeler module.

Embodiments of the prediction system are capable of modeling the attack rates and predicting the expected number of attacks at at least one of different resolutions, granularity levels and horizons.

Embodiments of the prediction system are configured for use with a variety of attacks monitoring systems comprising at least one of low honeypot systems, medium honeypot systems and high interaction honeypot systems, and network telescope.

In embodiments of the prediction system, the information about each attack record in the Sensor Attack Data Database must comprise at least the following attributes:
a. attack timestamp - the timestamp of the observed attack; and
b. attack sensor - the attack sensor which can be either a honeypot ID or a subnet of a network telescope.

In these embodiments of the prediction system, each attack record may contain additional information describing different aspects of the attack. The additional information comprises at least one of target port number of an accessed resource in a WEB honeypot and type of observed attack according to IDS system.

In embodiments of the prediction system, the Context Filter Module comprises one or more filters configured to select at least one of the following features:
a) attack time - selecting attacks on specific date intervals;
b) attacked sensors - selecting only a subset of the monitored sensors;
c) attacking machines - selecting subset of attacking machines according to their source IP addresses;
d) attacking countries - selecting a subset of attacking countries using a GEO-IP service/API which is capable of matching source IP addresses to geo-locations;
e) sensor type - selecting specific sensor types;
f) protocols - selecting attacks on specific network protocols;
g) ports - selecting attacks on specific ports; and
h) content keywords - filtering attacks according to key words which appear in the attack messages.

In embodiments of the prediction system, the Context Filter Module is capable of combining multiple filters using at least one of "AND", "OR" and "NOT" operations.

In embodiments of the prediction system, the Configuration Manager Module is configured to allow the user to define at least one of the following four features:
a) granularity - specifies the hierarchical level in which prediction models are generated;
b) resolution - specifies the time unit of the prediction model;
c) window size - specifies how much historic data the resolution requires for generating a prediction; and
d) horizon - specifies, in the resolution, the time-interval between the current time and the predicted time.

In embodiments of the Configuration Manager Module, the granularity may comprise:
a) the entire monitoring system;
b) sensors of specific type;
c) a distinct model for each sensor in the monitoring system;
d) a distinct model for each port or protocol that the entire attack monitoring system monitors;
e) a distinct model for each port or protocol that each sensor of the attack monitoring system monitors;
f) a distinct model for each attack pattern discovered by the entire attack monitoring system;
g) a distinct model for each attack pattern discovered by each sensor of the attack monitoring system; and
h) a distinct model for each group of sensors that share a common behavior.

Embodiments of the Data Aggregator and Feature Extractor are configured to create the required features and target variables for the modeling task by using the following two layers of analysis:
a) first layer wherein a feature vector and target values are created using the window size and the horizon values set in the Configuration Manager Module;
b) second layer that the basic feature vector from the first layer, wherein second layer is configured to comprise:
   i. temporal features - according to the timestamp of the data obtained from the Data Aggregator and Feature Extractor Module;
   ii. moving average on a specific number of latest values of the Data Aggregator and Feature Extractor Module;
   iii. the ratio between two moving average with different numbers of latest values;
   iv. exponential moving average on a predetermined number of latest values obtained from the Data Aggregator and Feature Extractor Module;
   v. the ratio between two exponential moving average on different numbers of latest values;
   vi. the number of times that an increase in the number of attacks was observed in the last specific number of values of the feature vector; and
   vii. the number of times that a decrease in the number of attacks was observed in the last specific numbers of values of the feature vector.

In embodiments of the Data Aggregator and Feature Extractor, the temporal feature comprises at least one of time of day, week and month features.

In embodiments of the prediction system, models can be learned with any supervised learning algorithm known in the art which solves regression problems. The supervised learning algorithm is one of Sequential Minimal Optimization (SMO) or Linear Regression.

In embodiments of the prediction system, the generated models are persistent in the Attack Rate Prediction Models Database and configured to be retrieved by a user as needed.

All the above and other characteristics and advantages of the invention will be further understood through the following illustrative and non-limitative description of embodiments thereof, with reference to the appended drawings.

### Brief Description of the Drawings

- Fig. 1 is a block diagram showing the main workflow, various components utilized in the prediction system of the present invention and the relations between the components;
- Fig. 2 is an example of a possible metadata of a single attack record being used by the prediction system of Fig. 1;
- Fig. 3 is an example of possible data being aggregated by a component of the prediction system of Fig. 1; and
- Fig. 4A - 4C show examples of graphs illustrating a comparison between the attack rates predicted by the prediction system of Fig. 1 and the actual attacks number.

### Detailed Description of Embodiments of the Invention

The present invention provides a prediction system configured for modeling the expected number of attacks on a computer or a communication network using data obtained by sensors of an attack monitoring system. The prediction system is capable of modeling the attack rates and predicts the expected number of attacks at different resolutions, granularity levels and horizons. The core modeling module of the system requires basic and minimal information about the observed attacks which makes the present prediction system applicable for a variety of attack monitoring systems such as low, medium and high interaction honeypot systems or network telescopes.

In essence, the modeling approach carried out by the presently described prediction system, is based on analysis of the metadata of attacks, rather than analyzing complete network traffic traces. The input to the prediction system is data from a database which contains summarized metadata about monitored attacks that have been detected by the attack monitoring system. The output is a generalized model that is capable of predicting the expected number of attacks at different resolutions, granularity levels and horizons.

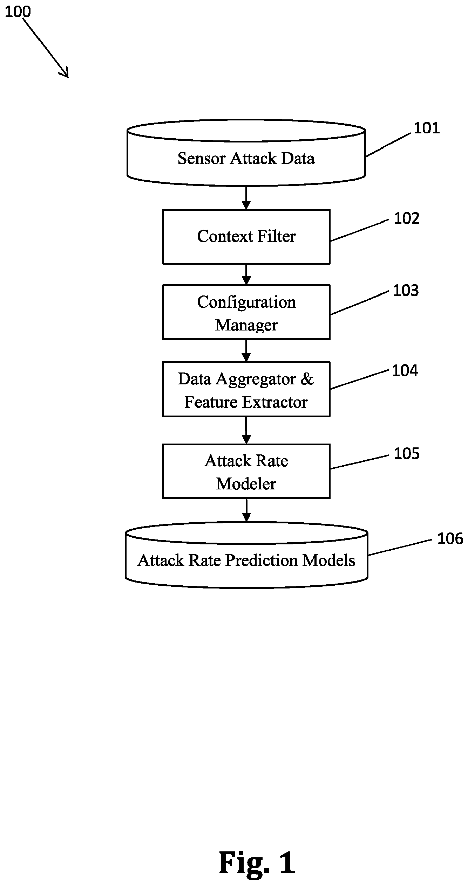

Fig. 1 is a block diagram illustrating the basic components and workflow process of the prediction system. The system is comprised of one or more processors, databases, and dedicated software containing instructions to cause the processors to carry out the functions described herein below of each of modules 102 to 105. In different embodiments at least some of the functions of some of the modules, e.g. the context filter module, can be carried out using hardware only.

Sensor Attack Data Database 101 is a repository database which contains metadata about observed attacks. Each attack record in the database describes an atomic attack on a monitor system. The information about each attack must contain at least the following attributes:
- Attack timestamp - the timestamp of the observed attack; and
- Attack sensor - the attack sensor which can be either the honeypot ID or the subnet of the network telescope.

Each attack record may contain additional information describing different aspects of the attack, such as: the target port number of the accessed resource in a WEB honeypot, or the type of observed attack according to IDS systems etc.

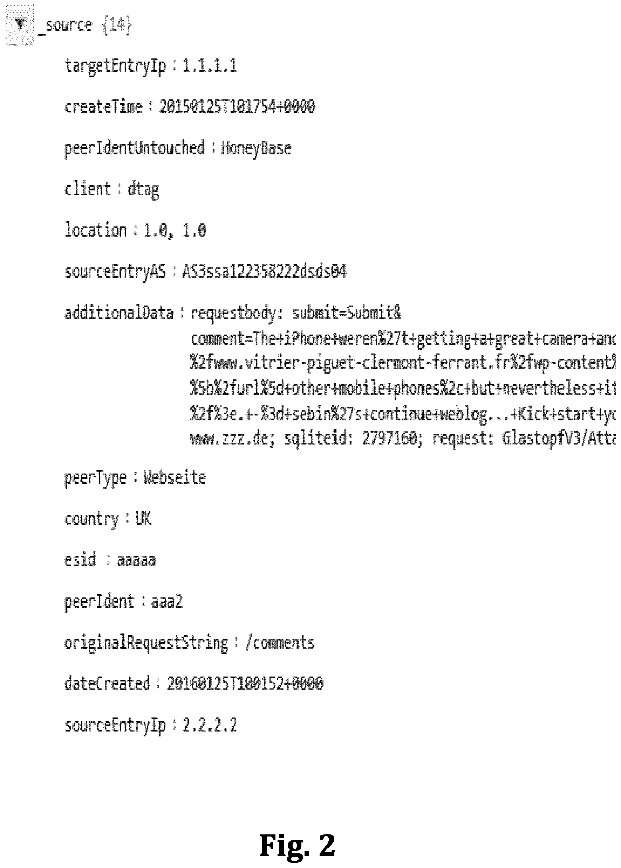

Fig. 2 illustrates a possible example of the structure of a single attack record on a monitor system. This example record contains the metadata of an attack on a Glastopf honeypot (web based attacks).

Context Filter Module 102 comprises a variety of filters. The exact numbers and types of which depend on the requirements of the model that the user of the prediction system wants to create. The present prediction system enables the user to select either a portion from the available attack records dataset and determine the desired contextual features of the attacks during the modeling process or to relate to the entire contents of database 101 without filtering it. Some examples of contextual features that may be selected include:
- Attack time - selecting attacks on specific date intervals e.g. attacks between August 2015 and January 2016.
- Attacked sensors - selecting only a subset of the monitored sensors.
- Attacking machines - selecting subset of the attacking machines according to their source IP addresses.
- Attacking countries - selecting a subset of attacking countries. This filter requires using a GEO-IP service/API which is capable of matching source IP addresses to geo-locations.
- Sensor type - selecting specific sensor types, e.g. attacks only on Glastopf honeypot.
- Protocols - selecting attacks on specific network protocols, e.g.: TCP, UDP, SMB, MYSQL, HTTP, FTP, etc.
- Ports - selecting attacks on specific ports.
- Content keywords - filtering attacks according to key words which appear in the attack messages.

Context Filter Module 102 is capable of combining multiple filters using "AND", "OR" and "NOT" operations.

Configuration Manager Module 103 is a component of the prediction system which enables the user to define in detail the configuration of the trained model. Configuration Manager 103 specifies four features:
1. Granularity - The granularity specifies the hierarchical level in which the prediction models are generated. It can vary from a single model for the entire monitoring system to a series of multiple models for each monitored sensor/service pair. Some examples of granularity levels:
   a. The entire monitoring system.
   b. All sensors of a specific type, e.g. modeling the total number of attacks on all of the honeypots which emulate WEB servers.
   c. Sensor - modeling a distinct model for each honeypot/subnet in the monitoring system.
   d. Port/Protocol - modeling a distinct model for each port or protocol that the system monitors. It is also possible to define a more detailed granularity level which analyzes Port/Protocols for each monitored sensor.
   e. Attack Pattern - modeling a distinct model for each discovered attack pattern. Methods of creating these models are not relevant to the present invention. Examples of how they are created can be found in co-pending patent application (attorney docket No. 35739/IL/16) to the applicant of the present application. It is also possible to define a more detailed granularity level which analyzes attack patterns for each monitored sensor.
   f. Sensors Segments - modeling groups of monitored sensors that share a common behavior. Methods of creating these groups are not relevant to the present invention. Examples can be found in co-pending patent application (attorney docket no. 35197/IL/16) to the applicant of the present invention.
2. Resolution - the resolution specifies the time unit of the prediction model. For example predicting the number of attacks in the next hour or day.
3. Window Size - this feature refers to the resolution unit and specifies how much historic data is required for generating a prediction. For example using the number of attacks in the previous five hours in order to predict attacks that will occur in the next hour.
4. Horizon - the horizon relates to the resolution units and specifies the time-interval between the current time (and available data) and the predicted time. For example predicting the number of attacks in ten hours from the current time.

Data Aggregator & Feature Extractor Module 104 is another component of the prediction system which is responsible, as a first step, for aggregating the number of observed attacks. The Data Aggregator & Feature Extractor Module 104 counts the number of observed attacks which meet the conditions that were defined in the Context Filter Module 102. Moreover, the number of attacks is grouped according to the resolutions and granularity levels specified by Configuration Manager Module 103.

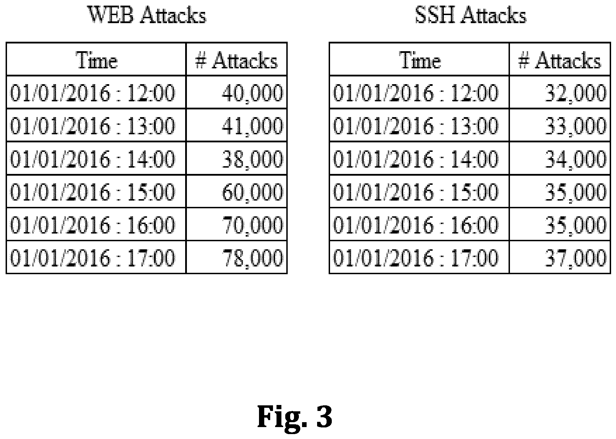

Fig. 3 is a table that illustrates data from an example monitoring system consisting of two types of honeypots: "WEB" and "SSH" (Secure Shell Honeypots), being aggregated by a first step executed by the Data Aggregator & Feature Extractor Module 104. The resolution is defined to be one hour and the granularity is based on the honeypot type.

Once the data has been aggregated, the Data Aggregator & Feature Extractor Module 104 carries out a second step of creating the required features and target variable for the modeling task. Features are created in two layers of analysis:
1. Layer 1 - the first layer of analysis explicitly utilizes the results of the first step of the Data Aggregator & Feature Extractor Module 104 to build a feature vector and target values. The window size and the horizon values set in the Configuration Manager Module 103 are used to determine the relevant values for each target value to be predicted. For example, as illustrate in Fig. 3, if the window size is set to the value of 5 and the horizon set to the value of 1, then the records from 12:00 to 16:00 (the first five records) will be used to predict the 17:00 record; the 13:00 to 17:00 records will be used to predict the 18:00 record, and so on.
2. Layer 2 - this layer extends the basic and explicit feature vector from the analysis of layer 1. Examples of possible extensions can include the following:
   - Temporal features - time of day, week, and month features according to the timestamps of the aggregated data (first step of the Data Aggregator & Feature Extractor Module 104).
   - Moving average on the latest K values of the aggregated data.
   - The ratio between two moving averages with different K's.
   - Exponential moving average on the latest K values of the aggregated data.
   - The ratio between two exponential moving averages with different K's.
   - The number of times that an increase in the number of attacks was observed in the last K values of the feature vector. Increase is assumed if the ratio between two successive values in the feature vector is above a certain threshold.
   - The number of times that a decrease in the number of attacks was observed in the last K values of the feature vector. Decrease is assumed if the ratio between two successive values in the feature vector is less than a certain threshold.

Attack Rate Modeler Module 105 is the core modeling component in the prediction system. Attack Rate Modeler Module 105 generates the required sets of models according to the configuration specified in the Configuration Manager Module 103. The models are created according to the extracted features that were prepared by the Data Aggregator & Feature Extractor Module 104. The prediction models can be learned with any supervised learning algorithm known in the art which solves regression problems, e.g. the target variable numeric algorithm. In practice, some possible models can be trained using Linear Regression and SMO (Sequential Minimal Optimization).

Linear regression is an intuitive model based on a linear equation which assumes that the relationship between the dependent variable and the feature vector is linear. This relationship is modeled through a disturbance term or error variable which is an unobserved random variable that adds noise to the linear relationship between the dependent variable and the feature vector.

SMO is an adaptation to SVM (Support Vector Machine) classification models in which the goal is to find a function on the feature space that has the smallest deviation from the actual value of the target variable and at the same time is flat as possible.

At the end of the modeling stage, all the regression models are stored in a model repository.

Attack Rate Prediction Models 106 is a repository component in the prediction system which stores all the generated models created by the Attack Rate Modeler 105. Models are persistent in the Attack Rate Prediction Models 106 and retrieved by the network administrator as needed.

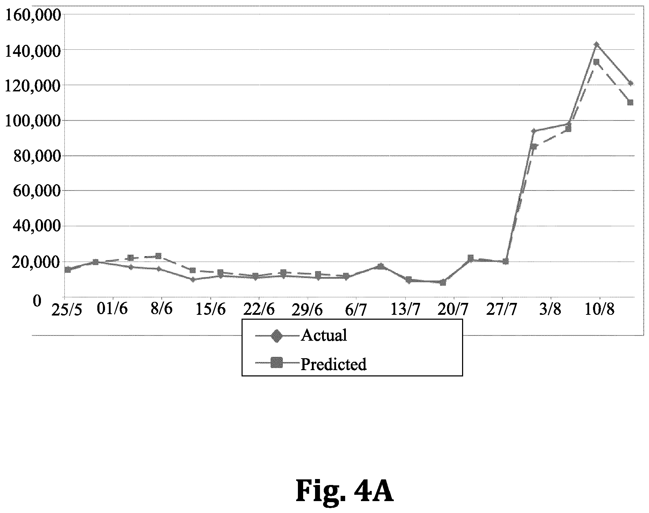

Figs. 4A-4C demonstrate the applicability of the method of the present invention, by analyzing a massive dataset of attacks on a T-pot Multi-Honeypot platform. T-pot contains multiple types of low and medium interaction honeypots, emulating various types of network services and protocols, including: HTTP, SSH, SMB, FTP, MSSQL and VOIP.

In this analysis, the training prediction models are based on two granularity levels: first, a global model which estimate the global number of attacks on the honeypot system. Second, models tailored for two specific honeypot types - WEB and SSH. The analyzed dataset contained 167 million attacks on the T-pot platform between July 2014 and August 2015. In this case, the prediction system of the present invention is applied using one hour resolution, with window size of ten hours and horizon of one hour.

In order to evaluate the prediction system of the present invention, Figs. 4A-4C show the comparison between the predicted number of attacks to the actual number using time based splitting strategy. In these figures the dashed lines represent the predicted values and the solid lines represent the actual values.

Fig. 4A shows the results for the entire attack analysis.

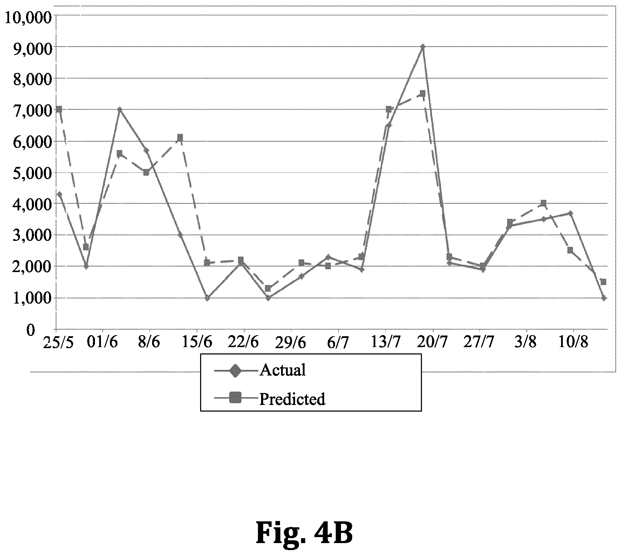

Fig. 4B shows the results for the WEB attack analysis. And,

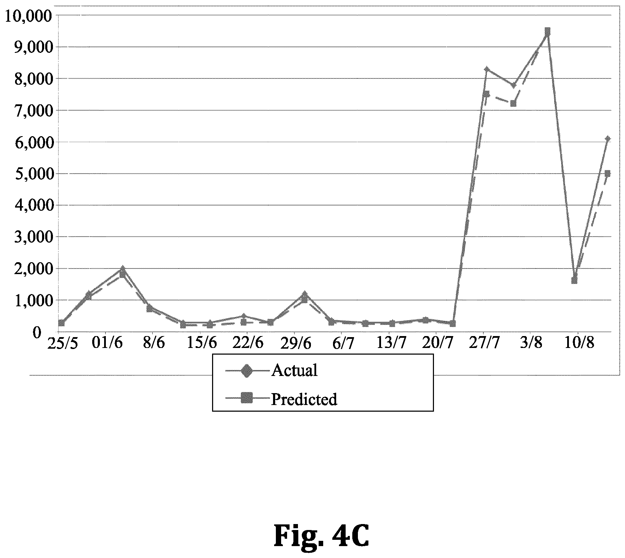

Fig. 4C shows the results for the SSH attack analysis.

In general, the results demonstrate high prediction accuracy in all three evaluated scenarios.

Although embodiments of the invention have been described by way of illustration, it will be understood that the invention may be carried out with many variations, modifications, and adaptations, without exceeding the scope of the claims.

### Bibliography

### PATENT DOCUMENTS

attorney docket No. 35739/IL/16
attorney docket no. 35197/IL/16

### OTHER PUBLICATIONS

[1] Zhenxin Zhan, Maochao Xu, and Shouhuai Xu, "Characterizing Honeypot-Captured Cyber Attacks: Statistical Framework and Case Study".
[2] M. Kaâniche, E. Alata, V. Nicomette, Y. Deswarte, M. Dacier, "Empirical Analysis and Statistical Modeling of Attack Processes based on Honeypots".
[3] Shevade, Shirish Krishnaj, et al. "Improvements to the SMO algorithm for SVM regression." IEEE transactions on neural networks 11.5 (2000): 1188-1193.

## Claims

1. A prediction system configured for modeling the expected number of attacks on a computer or communication network using data obtained from sensors of an attack monitoring system, the prediction system comprising:
a) a Sensor Attack Data Database (101) configured to contain metadata about attacks observed by the sensors of the attack monitoring system;
b) a Context Filter Module (102) which contains a variety of filters that are configured to define desired contextual features of the attacks data received from the Sensor Attack Data Database (101);
c) a Configuration Manager Module (103) which is configured to enable a user to define a configuration of models used to predict the expected number of attacks on the computer or communication network;
d) a Data Aggregator and Feature Extractor Module (104) which is configured to aggregate the number of observed attacks contained in the Sensor Attack Data Database (101) which meet the conditions that were defined in the Context Filter Module (102) and to create the required features and target variables for the modeling task;
e) an Attack Rate Modeler Module (105) which is configured to use the features and target variables from the Data Aggregator and Feature Extractor Module (104) and to generate the required sets of models according to the configurations specified in the Configuration Manager Module (103); and
f) an Attack Rate Prediction Models Database (106) which is configured to store all the models generated in the Attack Rate Modeler module (105); the prediction system wherein:
i. the Context Filter Module (102) is configured to combine multiple filters using "AND", "OR" and "NOT" operations and comprises at least two filters, each of which filters is configured to select one feature from data stored in the Sensor Attack Data Database (101) that comprises the following features:
a) attacks on specific date intervals;
b) a subset of the monitored sensors;
c) a subset of attacking machines according to their source IP addresses;
d) a subset of attacking countries;
e) specific sensor types;
f) attacks on specific network protocols;
g) attacks on specific ports; and
h) attacks according to keywords which appear in attack messages; and
ii. the Configuration Manager Module (103) specifies the following four features, which enable the user to define in detail the configuration of models used to predict the expected number of attacks on the computer or communication network:
a) granularity, which specifies the hierarchal level in which prediction models are generated;
b) resolution, which specifies the time unit of the prediction model;
c) window size, which specifies how much historic data the resolution requires for generating a prediction;
d) horizon, which specifies, in the resolution, the time-interval between the current time and the predicted time; and
iii. the Attack Rate Modeler Module (105) creates prediction models that can be learned with any linear or non-linear supervised learning algorithm known in the art which solves regression problems.

2. The prediction system of claim 1, configured to model the attack rates and predict the expected number of attacks at: different resolutions, granularity levels and horizons.

3. The prediction system of claim 1, configured for use with a variety of attacks monitoring systems comprising at least one of: low honeypot systems, medium honeypot systems and high interaction honeypot systems, and network telescope.

4. The prediction system of claim 1, wherein the information about each attack record in the Sensor Attack Data Database (101) must comprise at least the following attributes:
a) attack timestamp - the timestamp of the observed attack; and
b) attack sensor - the attack sensor which can be either a honeypot ID or a subnet of a network telescope.

5. The prediction system of claim 4, wherein each attack record may contain additional information describing different aspects of the attack.

6. The prediction system of claim 5, wherein the additional information in each attack record comprises at least one of: target port number of an accessed resource in a WEB honeypot and type of observed attack according to IDS system.

7. The prediction system of claim 1, wherein the granularity feature of the Configuration Manager Module (103) may comprise:
a) the entire monitoring system;
b) sensors of specific type;
c) a distinct model for each sensor in the monitoring system;
d) a distinct model for each port or protocol that the entire attack monitoring system monitors;
e) a distinct model for each port or protocol that each sensor of the attack monitoring system monitors;
f) a distinct model for each attack pattern discovered by the entire attack monitoring system;
g) a distinct model for each attack pattern discovered by each sensor of the attack monitoring system; and
h) a distinct model for each group of sensors that share a common behavior.

8. The prediction system of claim 1, wherein the Data Aggregator and Feature Extractor (104) is configured to create the required features and target variables for the modeling task by using the following two layers of analysis:
a) first layer wherein a feature vector and target values are created using the window size and the horizon values set in the Configuration Manager Module (103);
b) second layer that extends the basic and explicit feature vector from the analysis of the first layer, wherein the second layer is configured to comprise one or more of:
i. temporal features - according to the timestamp of the data obtained from the Data Aggregator and Feature Extractor Module (104);
ii. moving average on a specific number of latest values of the Data Aggregator and Feature Extractor Module (104);
iii. the ratio between two moving average with different numbers of latest values;
iv. exponential moving average on a predetermined number of latest values obtained from the Data Aggregator and Feature Extractor Module (104);
v. the ratio between two exponential moving average on different numbers of latest values;
vi. the number of times that an increase in the number of attacks was observed in the last specific number of values of the feature vector; and
vii. the number of times that a decrease in the number of attacks was observed in the last specific numbers of values of the feature vector.

9. The prediction system of claim 8, wherein the temporal feature of the Data Aggregator and Feature Extractor (104) comprises at least one of: time of day, week and month features.

10. The prediction system of claim 1, wherein the non-linear supervised learning algorithm is Sequential Minimal Optimization, SMO

11. The prediction system of claim 1, wherein the generated models are persistent in the Attack Rate Prediction Models Database (106) and configured to be retrieved by a user as needed.

12. The prediction system of claim 1, wherein a subset of attacking countries are selected using a GEO-IP service/API which is capable of matching source IP addresses to geo-locations.

13. The prediction system of claim 1, wherein the linear supervised learning algorithm is Linear Regression.

## Patentansprüche

1. Prognosesystem, konfiguriert zur Modellierung der zu erwartenden Anzahl von Angriffen auf einen Computer oder ein Kommunikationsnetzwerk unter Verwendung von Daten, die von Sensoren eines Angriffs-Monitoringsystems gewonnen werden, wobei das Prognosesystem aufweist:
a) eine Datenbank (101) mit Angriffsdaten der Sensoren, die konfiguriert ist, um Metadaten über Angriffe zu enthalten, die von den Sensoren des Angriffs-Monitoringsystems verzeichnet wurden;
b) ein Kontext-Filtermodul (102), das eine Auswahl von Filtern beinhaltet, die konfiguriert sind, um erwünschte kontextuelle Merkmale der Angriffsdaten zu definieren, die von der Datenbank (101) mit den Angriffsdaten der Sensoren empfangen wurden;
c) ein Konfigurations-Manager-Modul (103), das konfiguriert ist, damit ein Nutzer eine Konfiguration von Modellen definieren kann, die verwendet werden, um die zu erwartende Anzahl von Angriffen auf den Computer oder das Kommunikationsnetzwerk vorherzusagen;
d) ein Datenaggregator- und Merkmals-Extraktions-Modul (104), das derart konfiguriert ist, dass es die Anzahl der verzeichneten Angriffe, die in der Datenbank (101) mit den Angriffsdaten der Sensoren enthalten sind und mit den im Kontext-Filtermodul (102) definierten Bedingungen übereinstimmen, aggregiert und die erforderlichen Funktionen und Zielvariablen für die Modellierungsaufgabe erzeugt;
e) ein Angriffsraten-Modellier-Modul (105), das derart konfiguriert ist, dass es die Funktionen und Zielvariablen von dem Datenaggregator- und Merkmals-Extraktions-Modul (104) verwendet und die geforderten Modellsätze gemäß der Konfigurationen, die im Konfigurations-Manager-Modul (103) definiert wurden, erzeugt; und
f) eine Datenbank (106) für Angriffsraten-Prognosemodelle, die derart konfiguriert ist, dass sie sämtliche Modelle speichert, die im Angriffsraten-Modellier-Modul (105) erzeugt wurden;
wobei in dem Prognosesystem:
i. das Kontext-Filtermodul (102) derart konfiguriert ist, dass es mehrere Filter kombiniert, die "UND", "ODER" und "NICHT" Operationen verwendet und zumindest zwei Filter aufweist, von denen jeder derart konfiguriert ist, dass er aus den Daten, die in der Datenbank (101) mit den Angriffsdaten der Sensoren gespeichert sind, eine der folgenden Eigenschaften auswählen kann:
a) Angriffe zu bestimmten Zeiträumen;
b) eine Teilmenge der verzeichneten Sensoren;
c) eine Teilmenge von angreifenden Maschinen nach deren Quell-IP-Adressen;
d) eine Teilmenge von angreifenden Ländern;
e) bestimmte Sensortypen;
f) Angriffe auf bestimmte Netzwerkprotokolle;
g) Angriffe auf bestimmte Ports; und
h) Angriffe nach Schlüsselwörtern, die in Angriffsnachrichten vorkommen; und
ii. das Konfigurations-Manager-Modul (103) die folgenden vier Eigenschaften spezifiziert, die dem Nutzer die detaillierte Konfiguration der Modelle ermöglichen, die verwendet werden, um die zu erwartende Anzahl von Angriffen auf den Computer oder das Kommunikationsnetzwerk zu prognostizieren:
a) Granularität, die die Hierarchiestufe bestimmt, in der die Prognosemodelle erzeugt werden;
b) Auflösung, die den Zeitraum des Prognosemodells bestimmt;
c) Fenstergröße, die bestimmt, wieviele historische Daten die Auflösung benötigt, um eine Prognose zu erzeugen;
d) Horizont, der, bei gegebener Auflösung, den Zeitraum zwischen aktueller Zeit und Prognosezeit bestimmt; und
iii. das Angriffsraten-Modellier-Modul (105) Prognosemodelle erzeugt, die mit jedem überwachten linearen und nichtlinearen Lernalgorithmus nach dem Stand der Technik angelernt werden kann, welcher Regressionsaufgaben lösen kann.

2. Prognosesystem gemäß Anspruch 1, das derart konfiguriert ist, dass es die Angriffsraten modelliert und die zu erwartenden Angriffe prognostiziert bei:
unterschiedlichen Auflösungen, Granularitätsstufen und Horizonten.

3. Prognosesystem gemäß Anspruch 1, das konfiguriert ist, für die Verwendung mit einer Auswahl von Angriffs-Monitoringsystemen, die zumindest eines aufweisen von:
Low-Honeypot-Systemen, Medium-Honeypot-Systemen und High-Interaction Honeypot-Systemen, sowie Network-Telescope.

4. Das Prognosesystem gemäß Anspruch 1, wobei die Information über jede Aufzeichnung eines Angriffs in der Datenbank (101) mit den Angriffsdaten der Sensoren zumindest die folgenden Attribute aufweisen muss:
a) Angriffs-Zeitstempel - der Zeitstempel für den verzeichneten Angriff; und
b) Angriffs-Sensor - der Angriffs-Sensor, der entweder eine Honeypot-ID oder ein Subnetz eines Network-Telescopes sein kann.

5. Das Prognosesystem gemäß Anspruch 4, wobei jede Aufzeichnung eines Angriffs zusätzliche Informationen beinhalten kann, die unterschiedliche Aspekte des Angriffs beschreiben.

6. Das Prognosesystem gemäß Anspruch 5, wobei die zusätzlichen Informationen in jeder Aufzeichnung eines Angriffs zumindest entweder die Nummer des Ziel-Ports einer aufgerufenen Einrichtung in einem WEB-Honeypot oder die Art des verzeichneten Angriffs gemäß IDS-System aufweisen.

7. Das Prognosesystem gemäß Anspruch 1, wobei die Granularitäts-Funktion des Konfigurations-Manager-Moduls (103) aufweisen kann:
a) das gesamte Monitoring-System;
b) Sensoren eines bestimmten Typs;
c) ein eigenes Modell für jeden Sensor im Monitoring-System;
d) ein eigenes Modell für jeden Port oder jedes Protokoll, das das gesamte Angriffs-Monitoringsystem überwacht;
e) ein eigenes Modell für jeden Port oder jedes Protokoll, das jeder Sensor des Angriffs-Monitoringsystems überwacht;
f) ein eigenes Modell für jedes Angriffsmuster, das von dem gesamten Angriffs-Monitoringsystem entdeckt wurde;
g) ein eigenes Modell für jedes Angriffsmuster, das von jedem Sensor des Angriffs-Monitoringsystems entdeckt wurde;
h) ein eigenes Modell für jede Gruppe von Sensoren, die sich ein gemeinsames Verhalten teilen.

8. Das Prognosesystem gemäß Anspruch 1, wobei der Datenaggregator- und Merkmals-Extraktor (104) derart konfiguriert ist, dass er die erforderlichen Funktionen und Zielvariablen für die Modellierungsaufgabe unter Verwendung der folgenden beiden Analyselayer erzeugt:
a) einen ersten Layer, in dem ein Eigenschaftenvektor und Zielwerte erzeugt werden, unter Verwendung der Fenstergröße und der Horizontwerte, die im Konfigurations-Manager-Modul (103) gesetzt wurden;
b) einen zweiten Layer, der über den grundlegenden und eindeutigen Vektor aus der Analyse des ersten Layers hinausgeht, wobei der zweite Layer derart konfiguriert ist, dass er eines oder mehrere der folgenden Features aufweist:
i. Temporäre Eigenschaften - gemäß dem Zeitstempel der Daten, die vom Datenaggregator- und Merkmals-Extraktions-Modul (104) erhalten wurden;
ii. Gleitender Mittelwert über eine bestimmte Anzahl der letzten Werte des Datenaggregator- und Merkmals-Extraktions-Moduls (104);
iii. Verhältnis zwischen zwei gleitenden Mittelwerten mit unterschiedlichen Anzahlen der letzten Werte;
iv. Exponentieller gleitender Mittelwert über eine vorgegebene Anzahl der letzten Werte, die vom Datenaggregator- und Merkmals-Extraktions-Modul (104) erhalten wurden;
v. Das Verhältnis zwischen zwei exponentiellen gleitenden Mittelwerten mit unterschiedlichen Anzahlen der letzten Werte;
vi. Die Anzahl der beobachteten Anstiege in der letzten bestimmten Anzahl von Werten des Eigenschaftenvektors;
vii. Die Anzahl der beobachteten Rückgänge in der letzten bestimmten Anzahl von Werten des Eigenschaftenvektors.

9. Das Prognosesystem gemäß Anspruch 8, wobei die temporären Eigenschaften des Datenaggregator- und Merkmals-Extraktions-Moduls (104) zumindest eines der folgenden Features aufweist: Tageszeit, Wochen- und Monatsfeatures.

10. Das Prognosesystem gemäß Anspruch 1, wobei der nichtlineare überwachte Lernalgorithmus die Sequentielle Minimale Optimierung, SMO ist.

11. Das Prognosesystem gemäß Anspruch 1, wobei die erzeugten Modelle in der Datenbank (106) der Angriffsraten-Prognosemodelle persistent sind und derart konfiguriert sind, dass sie vom Nutzer nach Bedarf abgefragt werden können.

12. Das Prognosesystem gemäß Anspruch 1, wobei eine Teilmenge von angreifenden Ländern, unter Verwendung eines GEO-IP-Services / API, der Quell-IP-Adressen mit Standorten matchen kann, ausgewählt werden.

13. Das Prognosesystem gemäß Anspruch 1, wobei der lineare überwachte Lernalgorithmus eine lineare Regression ist.

## Revendications

1. Système de prédiction configuré pour modéliser le nombre attendu d'attaques sur un ordinateur ou un réseau de communication en utilisant des données obtenues à partir de capteurs d'un système de surveillance d'attaques, le système de prédiction comprenant :
a) une base de données de données d'attaque de capteurs (101) configurée pour contenir des métadonnées concernant des attaques observées par les capteurs du système de surveillance d'attaques ;
b) un module de filtres de contexte (102) qui contient une variété de filtres qui sont configurés pour définir des caractéristiques contextuelles désirées des données d'attaques reçues à partir de la base de données de données d'attaque de capteurs (101) ;
c) un module de gestionnaire de configuration (103) qui est configuré pour permettre à un utilisateur de définir une configuration de modèles utilisés pour prédire le nombre attendu d'attaques sur l'ordinateur ou le réseau de communication ;
d) un module d'agrégateur de données et d'extracteur de caractéristiques (104) qui est configuré pour agréger le nombre d'attaques observées contenues dans la base de données de données d'attaque de capteurs (101) qui satisfont aux conditions qui ont été définies dans le module de filtres de contexte (102) et pour créer les caractéristiques et les variables cibles nécessaires pour la tâche de modélisation ;
e) un module de modélisateur de taux d'attaque (105) qui est configuré pour utiliser les caractéristiques et les variables cibles provenant du module d'agrégateur de données et d'extracteur de caractéristiques (104) et pour générer les ensembles de modèles nécessaires en fonction des configurations spécifiées dans le module de gestionnaire de configuration (103) ; et
f) une base de données de modèles de prédiction de taux d'attaque (106) qui est configurée pour stocker tous les modèles générés dans le module de modélisateur de taux d'attaque (105) ;
le système de prédiction dans lequel :
i. le module de filtres de contexte (102) est configuré pour combiner de multiples filtres en utilisant des opérations « ET », « OU » et « NON » et comprend au moins deux filtres, chacun de ces filtres est configuré pour sélectionner une caractéristique à partir de données stockées dans la base de données de données d'attaque de capteurs (101) qui comprend les caractéristiques suivantes :
a) des attaques sur des intervalles de dates spécifiques ;
b) un sous-ensemble des capteurs surveillés ;
c) un sous-ensemble de machines attaquantes en fonction de leurs adresses IP source ;
d) un sous-ensemble de pays attaquants ;
e) des types de capteurs spécifiques ;
f) des attaques sur des protocoles réseau spécifiques ;
g) des attaques sur des ports spécifiques ; et
h) des attaques en fonction de mots-clés qui apparaissent dans des messages d'attaque ; et
ii. le module de gestionnaire de configuration (103) spécifie les quatre caractéristiques suivantes, qui permettent à l'utilisateur de définir en détail la configuration de modèles utilisés pour prédire le nombre attendu d'attaques sur l'ordinateur ou le réseau de communication :
a) une granularité, qui spécifie le niveau hiérarchique dans lequel des modèles de prédiction sont générés ;
b) une résolution, qui spécifie l'unité de temps du modèle de prédiction ;
c) une taille de fenêtre, qui spécifie combien de données d'historique exige la résolution pour la génération d'une prédiction ;
d) un horizon, qui spécifie, dans la résolution, l'intervalle de temps entre le temps actuel et le temps prédit ; et
iii. le module de modélisateur de taux d'attaque (105) crée des modèles de prédiction qui peuvent être appris avec n'importe quel algorithme d'apprentissage supervisé linéaire ou non linéaire connu dans l'art qui résout des problèmes de régression.

2. Système de prédiction selon la revendication 1, configuré pour modéliser les taux d'attaques et prédire le nombre attendu d'attaques à : des résolutions, des niveaux de granularité et des horizons différents.

3. Système de prédiction selon la revendication 1, configuré pour utiliser une variété de systèmes de surveillance d'attaques comprenant au moins un parmi : des systèmes de pot de miel faibles, des systèmes de pot de miel moyens et des systèmes de pot de miel à interaction élevée, et un télescope de réseau.

4. Système de prédiction selon la revendication 1, dans lequel les informations concernant chaque enregistrement d'attaque dans la base de données de données d'attaque de capteurs (101) doivent comprendre au moins les attributs suivants :
a) horodatage d'attaque - l'horodatage de l'attaque observée ; et
b) capteur d'attaque - le capteur d'attaque qui peut être soit un ID de pot de miel soit un sous-réseau d'un télescope de réseau.

5. Système de prédiction selon la revendication 4, dans lequel chaque enregistrement d'attaque peut contenir des informations additionnelles décrivant différents aspects de l'attaque.

6. Système de prédiction selon la revendication 5, dans lequel les informations additionnelles dans chaque enregistrement d'attaque comprennent au moins un parmi : un numéro de port cible d'une ressource consultée dans un pot de miel WEB et un type d'attaque observée selon un système IDS.

7. Système de prédiction selon la revendication 1, dans lequel la caractéristique de granularité du module de gestionnaire de configuration (103) peut comprendre :
a) le système de surveillance complet ;
b) des capteurs de type spécifique ;
c) un modèle distinct pour chaque capteur dans le système de surveillance ;
d) un modèle distinct pour chaque port ou protocole que le système de surveillance d'attaques complet surveille ;
e) un modèle distinct pour chaque port ou protocole que chaque capteur du système de surveillance d'attaques surveille ;
f) un modèle distinct pour chaque schéma d'attaque découvert par le système de surveillance d'attaques complet ;
g) un modèle distinct pour chaque schéma d'attaque découvert par chaque capteur du système de surveillance d'attaques ; et
h) un modèle distinct pour chaque groupe de capteurs qui partagent un comportement commun.

8. Système de prédiction selon la revendication 1, dans lequel le module d'agrégateur de données et d'extracteur de caractéristiques (104) est configuré pour créer les caractéristiques et les variables cibles nécessaires pour la tâche de modélisation en utilisant les deux couches d'analyse suivantes :
a) une première couche dans laquelle un vecteur de caractéristique et des valeurs cibles sont créés en utilisant la taille de fenêtre et les valeurs d'horizon établies dans le module de gestionnaire de configuration (103) ;
b) une seconde couche qui étend le vecteur de caractéristique de base et explicite à partir de l'analyse de la première couche, dans lequel la seconde couche est configurée pour comprendre un ou plusieurs parmi :
i. des caractéristiques temporelles - en fonction de l'horodatage des données obtenues à partir du module d'agrégateur de données et d'extracteur de caractéristiques (104) ;
ii. une moyenne mobile sur un nombre spécifique de valeurs les plus récentes du module d'agrégateur de données et d'extracteur de caractéristiques (104) ;
iii. le rapport entre deux moyennes mobiles avec des nombres différents de valeurs les plus récentes ;
iv. une moyenne mobile exponentielle sur un nombre prédéterminé de valeurs les plus récentes obtenues à partir du module d'agrégateur de données et d'extracteur de caractéristiques (104) ;
v. le rapport entre deux moyennes mobiles exponentielles sur des nombres différents de valeurs les plus récentes ;
vi. le nombre de fois qu'une augmentation dans le nombre d'attaques a été observée dans le dernier nombre spécifique de valeurs du vecteur de caractéristique ; et
vii. le nombre de fois qu'une diminution dans le nombre d'attaques a été observée dans les derniers nombres spécifiques de valeurs du vecteur de caractéristique.

9. Système de prédiction selon la revendication 8, dans lequel la caractéristique temporelle du module d'agrégateur de données et d'extracteur de caractéristiques (104) comprend au moins une parmi : des caractéristiques d'heure de la journée, de semaine et de mois.

10. Système de prédiction selon la revendication 1, dans lequel l'algorithme d'apprentissage supervisé non linéaire est l'optimisation minimale séquentielle, SMO.

11. Système de prédiction selon la revendication 1, dans lequel les modèles générés sont persistants dans la base de données de modèles de prédiction de taux d'attaque (106) et configurés pour être récupérés par un utilisateur comme nécessaire.

12. Système de prédiction selon la revendication 1, dans lequel un sous-ensemble de pays attaquants est sélectionné en utilisant une API de services GEO-IP qui est capable de mettre en correspondance des adresses IP source avec des géolocalisations.

13. Système de prédiction selon la revendication 1, dans lequel l'algorithme d'apprentissage supervisé linéaire est la régression linéaire.
